Europäisches Patentamt

European Patent Office

Office européen des brevets

(11) Publication number: **0 265 084**
**A1**

## EUROPEAN PATENT APPLICATION

(21) Application number: **87308407.3**

(22) Date of filing: **23.09.87**

(51) Int. Cl.⁴ **C08L 9/00** , **C08L 9/06** , **C08L 7/00** , **B60C 1/00**

(30) Priority: **18.10.86 GB 8625023**

(43) Date of publication of application:
**27.04.88 Bulletin 88/17**

(84) Designated Contracting States:
**DE ES FR GB IT SE**

(71) Applicant: **SP TYRES UK LIMITED**
**Fort Dunlop**
**Erdington Birmingham B24 9QT(GB)**

(72) Inventor: **Blythe, Robert John**
**31 The Causeway**
**Yardley Birmingham B25 8UL(GB)**

(74) Representative: **Stewart, Charles Geoffrey**
**SP TYRES UK LIMITED Tyre Technical**
**Division**
**Fort Dunlop Erdington Birmingham B24**
**9QT(GB)**

(54) **Tyre tread compound.**

(57) A tyre tread compound characterised by 25 to 45 pphr of Styrene-Butadiene (SBR), at least 20 pphr natural rubber, at least 15 pphr medium cis polybutadiene, carbon black reinforcement and an aromatic oil wherein C/O is between 1.0 and 2.0 and 60>C-O>15, C being the amount of carbon black and O being the amount of aromatic oil in pphr. The SBR may comprise between 23 and 40% styrene. The resultant compound provides improved wet grip and wear properties.

## TYRE TREAD COMPOUND

This invention relates to a tyre tread compound which is particularly suitable for car tyres.

It is well known that the tread compound largely determines the wet grip and tread wear properties of a tyre. Normal car tyre tread compounds are based on Styrene Butadiene to give good wet grip together with satisfactory wear rates. It has been proposed, for example in UK patent 2119388 to blend Styrene Butadiene with natural rubber and polybutadiene, but such proposals have not been satisfactory. However, the inventor of this invention has discovered that wet grip and tread wear properties can be simultaneously improved by alternative means.

According to the invention a tyre tread compound is provided characterised by 25 to 45 pphr (parts per hundred of rubber) of styrene-butadiene (SBR), at least 20 pphr of natural rubber, at least 15 pphr of medium cis polybutadiene, carbon black reinforcement and an aromatic oil wherein C/O is between 1.0 and 2.0 and 60 > C-O > 15, C being the amount of carbon black in pphr and 0 is the amount of aromatic oil in pphr.

Preferably the SBR comprises 23 to 40% styrene. The values C and O are preferably such that:
1.3 > C/0 > 1.7 and 40 > C-0 > 20

The carbon black reinforcement may be in the range of 75 to 90 pphr and one preferred black is N234.

Further aspects of the invention will become apparent from the following embodiments described by way of example only.

Test tyres were made in sizes 155R13 and 165R13 using two different tyre compounds. The first compound was a natural production compound to provide control standard tyres and the second tyre compounds were formulated as follows:-

|  | Invention PPHR | Standard |
|---|---|---|
| Natural Rubber NR 9720 | 30.0 | – |
| Styrene Butadiene SBR 1712 | 35.0 | 35.0 |
| Styrene Butadiene SBR 1502 | – | 65.0 |
| Medium cis Polybutadiene | 35.0 | – |
| Zinc Oxide | 2.0 | 1.5 |
| Stearic Acid | 1.9 | 1.0 |
| Carbon Black N234 | 84.0 | 72.0 |
| Enerflex 94 | 36.5 | 26.5 |
| Antidegradant system | 2.5 | 2.5 |
| Sulphur 110 Mesh | 1.0 | 1.90 |
| MBS | 1.8 | 1.15 |

It should be noted that the aromatic oil content 0 is provided in this case by using oil extended SBR and oil extended polybutadiene. The resultant compound formulation had a C/0 ratio of 1.51 and a C-0 value of 28.4.

The tread compounds used as test samples were tested on a DRA (Dynamic Response Apparatus) to measure the complex modulus and the loss factors and the results were as follows:-

Test at 3% deflection at 15HZ

|  | Standard Compound | New Compound |
|---|---|---|
| Complex Modulus at 40 C MPa | 8.7 | 7.9 |
| Loss Factor at 40C | 0.35 | 0.43 |

Both were then assessed for wet rip, treadwear and handling and the test results were as follows:-

| Test | Standard | New tread |
|------|----------|-----------|
| Wet grip measured by stopping distances on Bridport pebble surface (wet) at MIRA Nuneaton | | |
| 155R13 | 100 | 105 |
| 165R13 | 100 | 110 |
| Tread Wear measured by running a 2.25-8 tyre on a trailer on an asphalt surface at MIRA Nuneaton | | |
| Handling assessed on a car over a variety of handling tests at MIRA Nuneaton | 100 | 110 |

It should be noted that the invention may be used with alternative reinforcement blacks and with other curative systems.

## Claims

1. A tyre tread compound characterised by 25 to 45 pphr (parts per hundred of rubber) of styrene-butadiene (SBR), at least 20 pphr natural rubber, at least 15 pphr medium cis polybutadiene, carbon black reinforcement and an aromatic oil wherein C/0 is between 1.0 and 2.0 and 60 > C-0 > 15 C being the amount of carbon black reinforcement in pphr and 0 the amount of aromatic oil in pphr.

2. A tyre tread compound according to claim 1 wherein the SBR comprises 23 to 40% styrene.

3. A tyre tread compound according to claim 1 or 2 wherein 1.3 > C/0 > 1.7 and 40 > C-0 > 20.

4. A tyre tread compound according to claim 1, 2 or 3 wherein the carbon black reinforcement is in the range of 75 to 90 pphr.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 142 857 (YOKOHAMA RUBBER CO.) <br> * Claims 1,2 * <br> --- | 1-4 | C 08 L 9/00 <br> C 08 L 9/06 <br> C 08 L 7/00 <br> B· 60 C 1/00 |
| X | EP-A-0 156 755 (GOODYEAR) <br> * Claims 1,3; page 3, line 35 - page 4, line 1; page 4, lines 14,15; page 5, line 18 * <br> --- | 1-4 | |
| A | FR-A-1 326 666 (FIRESTONE) <br> * Abstract, points A,1,7,9,B * <br> ----- | | |

TECHNICAL FIELDS SEARCHED (Int. Cl.4)

C 08 L
B 60 C

The present search report has been drawn up for all claims

| Place of search | Date of completion of the search | Examiner |
|---|---|---|
| THE HAGUE | 21-01-1988 | VAN HUMBEECK F.W.C. |

EPO FORM 1503 03.82 (P0401)